# EUROPEAN PATENT APPLICATION

(11) **EP 1 849 368 A2**
(43) Date of publication of application: **31.10.2007**
(21) Application number: 07106207.9
(22) Date of filing: 16.04.2007
(51) Int. Cl.: A23G 9/28

(54) **Machine for producing and dispensing ice cream**

(30) Priority: 28.04.2006 IT BO20060318
(71) Applicant: Ali SpA, 20123 Milano (IT)
(72) Inventor: Cocchi, Gino, 40137, Bologna (IT); Zaniboni, Gianni, 40037, Borgonuovo di Sasso Marconi (Bolo (IT)
(74) Representative: Ghioni, Carlo Raoul Maria

(57) **Abstract**

A machine for producing and dispensing ice cream, in particular ice cream frappes or shakes comprises a shake production unit (2) connected to a product dispensing device (4) and sensor means (10) for measuring the quantity of shake dispensed; the sensor means (10) comprise at least one emitter (12) of at least one laser ray (F) passing through a container (6) for collecting the shake dispensed having at least one window (6a) transparent to the laser ray (F); the latter is interrupted by the shake present in the container (6) when it reaches a predetermined level, interrupting shake dispensing.

## Description

The present invention relates to a machine for producing and dispensing ice cream.

In particular, the present invention relates to a machine for dispensing "ice cream frappes" or "shakes", without limiting the scope of the invention.

The term "ice cream frappe" or "shake" is used here to refer to any frozen or semi-frozen foodstuff with a neutral flavour, which may be whipped with a syrup which has the desired flavour, having a semiliquid consistency, that is to say a consistency such that it takes on the shape of the container which contains the foodstuff.

Prior art machines of the type described above comprise an ice cream production section which may be connected to a mixing unit for introducing and mixing the syrups.

The production section is connected to a dispensing device to allow a user to obtain a quantity of ready to eat ice cream.

The dispensing devices may be operated manually or, more appropriately, they can be controlled by a control and command unit managed by one or more sensors for detecting the quantity of ice cream dispensed, so as to guarantee that the container placed below the dispensing device and intended to receive the ice cream is filled correctly.

As is known, said sensors consist of devices designed to detect the weight of the ice cream dispensed, for example load cells.

In this case, the density of the ice cream must be controlled continuously and precisely during its production, to avoid possible variations, for example with variations in the type of mixture, which would consequently prevent the container from being filled correctly.

Even small variations in the density may lead to unacceptable variations in the volume of product dispensed.

In other cases there are volumetric sensors able to control the quantity of ice cream dispensed.

However, as is known, volumetric sensors are very complex, expensive and difficult to wash both manually and automatically.

The aim of the present invention is therefore to overcome the above-mentioned disadvantages by providing a machine for producing and dispensing ice cream, and more precisely ice cream frappes or shakes, which is free of the disadvantages described above.

Accordingly, the present invention achieves this aim with a machine for producing and dispensing ice cream, in particular ice cream frappes or shakes, which has the features described in one or more of the claims herein.

The technical features of the invention, in accordance with the afore-mentioned aims, are clearly indicated in the claims herein and the advantages of the invention are more apparent in the detailed description which follows, with reference to the accompanying drawings, which illustrate a preferred embodiment without limiting the scope of the invention, in which:
- Figure 1 is a schematic perspective view of a machine for producing and dispensing ice cream, in particular ice cream frappes or shakes, in accordance with the present invention;
- Figures 2 and 3 illustrate an enlarged detail of the machine from Figure 1 in two different operating conditions;
- Figure 4 illustrates another embodiment of the detail from Figure 2;
- Figure 5 illustrates the detail from Figures 2 and 3 in a different configuration; and
- Figure 6 is a schematic block diagram of the machine of Figure 1.

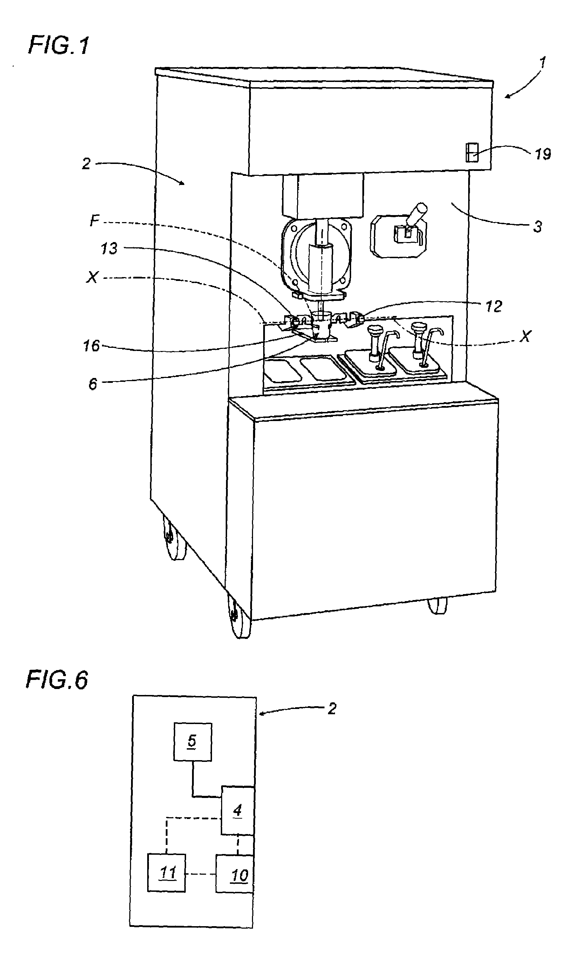

With reference to Figure 1, the numeral 1 denotes as a whole a machine for producing and dispensing ice cream frappes or shakes.

The machine 1 comprises a box-shaped base 2, substantially having the shape of a parallelepiped, delimited by a vertical front wall 3, where there is a device 4 for dispensing predetermined doses of shakes.

As is schematically illustrated in Figure 6, inside the base 2 there is a known type of unit 5 for producing ice cream, in particular shakes.

The ice cream production unit 5 is connected, in the known way, to the dispensing device 4 to allow dispensing of the shake produced into a collection container 6.

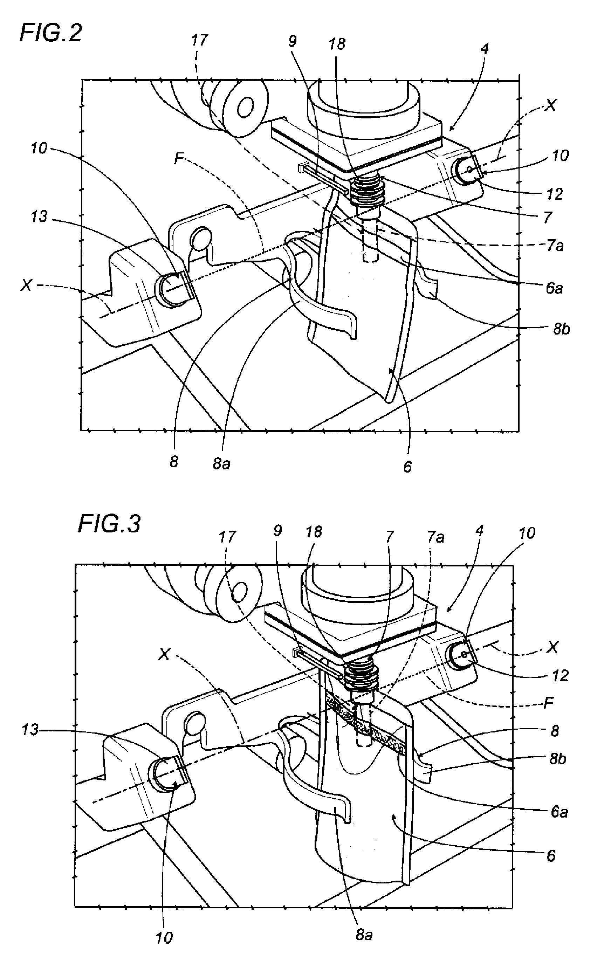

For this purpose, as illustrated in Figures 2, 3, 4 and 5, the dispensing device 4 comprises a dispensing nozzle 7 positioned close to collection container 6 positioning and holding means 8.

The dispensing nozzle 7 consists of a hollow cylindrical body 7a, through which the shake flows, extending for a length such that during the container 6 filling step it is able to guarantee that the shake is directed towards the bottom of the container 6 and does not tend to come out.

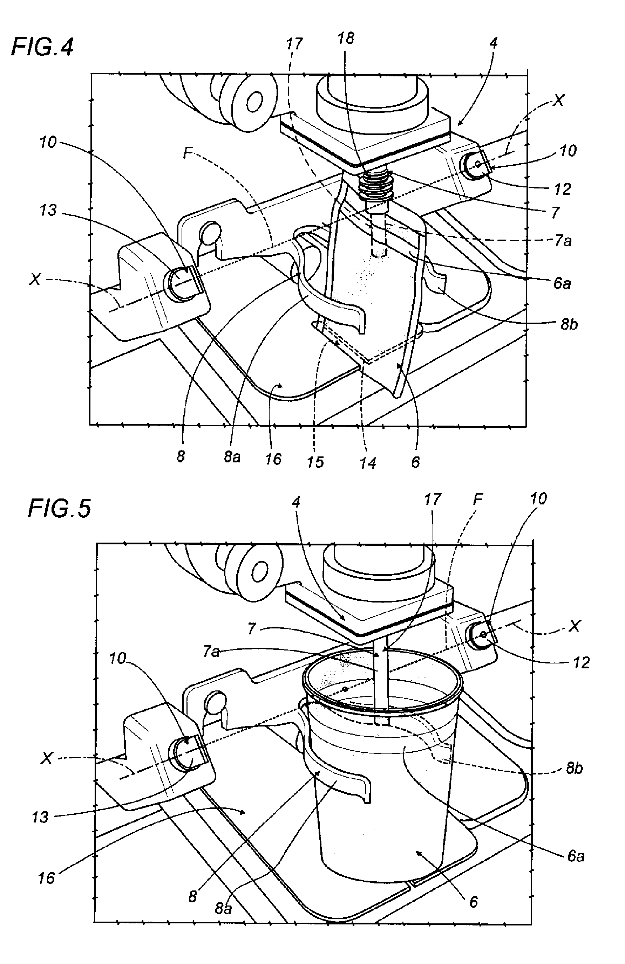

In the preferred embodiment illustrated in the accompanying drawings, the positioning and holding means 8 comprise two elastically deformable arms 8a and 8b extending substantially in a semi-circle which can hold a container 6 having the shape of a cup or the like (see Figure 5).

The positioning and holding means 8 are vertically aligned and positioned below the dispensing nozzle 7, in such a way that the container 6 can be placed in the correct position to directly receive the shake dispensed by the dispensing device 4.

Advantageously, as illustrated in Figures 2, 3, 4 and 5, the machine 1 also comprises sensor means 10 able to detect the quantity of shake dispensed into the container 6 and to automatically stop shake dispensing.

For this purpose, as is schematically illustrated in Figure 6, inside the box-shaped base 2 there are dispensing device 4 control and command means 11, operatively connected, in the known way and therefore not described in further detail, to the sensor means 10 and to the dispensing nozzle 7 to activate or stop shake dispensing.

Advantageously, the sensor means 10 comprise at least one emitter 12 of at least one energy ray F of the electromagnetic or laser type able to pass through the container 6 used to collect the shake dispensed, to intercept the shake contained in the container 6 (as illustrated in Figure 2 relative to a container 6 of the soft type and as illustrated in Figure 5 relative to a container 6 of the cup type).

The sensor means 10 also comprise a receiver 13 for the ray F emitted by the emitter 12, for receiving the ray emitted and for emitting a command signal to the dispensing device 4 control and command means 11.

The receiver 13 is positioned on the opposite side of the container 6 holding means 8 to the emitter 12, so that the ray F passes through the container 6 and intercepts the shake contained in it.

In particular, the emitter 12 and the receiver 13 are aligned with one another along an axis X which is substantially horizontal and coincides with the direction of propagation of the ray F.

In this way, the ray F is parallel with the free surface of the shake contained in the container 6, allowing the level of the shake present in the container 6 to be identified.

In the preferred embodiment, the ray F emitted by the emitter 12 belonging to the sensor means 10 is a laser ray, preferably with low energy content so that it does not alter the properties of the shake which it intercepts.

However, it should be noticed that the ray F may also be obtained with a beam of electromagnetic waves of any type and belonging to the range of electromagnetic waves which are invisible or visible, for example infrared and ultraviolet.

Moreover, even in the laser rays range the most suitable rays may be used, exploiting the various types of operation of lasers which may be summarised according to the following three processes: by spontaneous emission, by stimulated emission or by absorption, arriving at electron lasers which emit beams of waves typically electromagnetic.

It should be noticed that the ray F, in particular, as indicated, the laser ray F, cannot pass through the shake.

In other words, the shake is impermeable to the ray F emitted.

In contrast, the ray F emitted by the sensor means 10 finds the container 6 permeable, therefore the ray can pass through the container.

A type of container 6 suitable for this purpose consists, for example, of plastic transparent for the wavelength of the type of laser emitter used.

Therefore, if the laser used emits a ray whose wavelength is within the visible range, the container 6 comprises at least one region 6a through which the light ray can pass.

It should be emphasised that the container 6 must be transparent to the laser ray F only in the region 6a actually affected by the ray, therefore making any other zone available to carry advertising messages, as is schematically illustrated in Figures 2, 3, 4 and 5. In the preferred embodiment, said region 6a of the container 6 consists of a window having a predetermined height, extending along the entire periphery of the container 6.

To allow use of containers 6 of the soft type having a substantially flat rectangular shape (as illustrated in Figures 2, 3 and 4), the positioning and holding means 8 consist of a rod 9 fixed to the wall 3 and pointing, perpendicularly to the wall 3, towards the nozzle 7. In this way, the user is forced to position the soft container 6 in the correct way, that is to say, in a position in which it lies in a plane substantially perpendicular to the wall 3.

In another embodiment the positioning and holding means 8 consist of a guide 14, preferably a groove 15, in which the lower portion of the container 6 must be inserted to guarantee correct alignment of the container with the laser ray F.

The guide 14 is made on a collection plate 16 positioned below the elastically deformable arms 8a and 8b and aligned with the dispensing nozzle 7.

The collection plate 16 is also designed to collect and hold any shake residues which may accidentally come out of the dispensing nozzle 7.

Moreover, the latter comprises means 17 for rapid engagement of the container 6 closing cap 18 on the dispensing device.

In the preferred embodiment, the engagement means 17 coincide with the hollow cylindrical body 7a which constitutes the dispensing nozzle 7, as illustrated in Figures 2, 3, 4 and 5.

In practice, any form of container 6, for example of the soft type illustrated in Figure 2 or the cup type illustrated in Figure 5, is placed below the dispensing nozzle 7. Correct positioning of a soft container is guaranteed by the rod 9, whilst a cup type container is positioned and held by the two arms 8a and 8b.

The shake is dispensed, for example by pressing an activation button 19 and the container 6 begins to fill up.

The sensor means 10, and in particular their laser ray F, is activated by the control and command means 11 and passes through the container 6, then is intercepted by the receiver 13.

When the quantity of shake reaches the predetermined level in the container 6, the laser ray F intercepts the shake and does not reach the receiver 13, as illustrated in Figure 3.

At this point, the control and command means 11 receive a command from the receiver 13 which in turn emits a command signal and they interrupt shake dispensing, guaranteeing the desired container 6 filling.

It should be noticed that the machine 1 according to the present invention eliminates the disadvantages encountered in the prior art.

Optimum filling is guaranteed irrespective of the density or the type of shake dispensed. Moreover, the laser beam F emitter and receiver guarantee very simple production with low costs. Finally, both the emitter and the receiver of the laser beam can easily be cleaned and sanitised, contributing to greater machine cleanliness.

The invention described above is susceptible of industrial application and may be modified and adapted in several ways without thereby departing from the scope of the inventive concept. Moreover, all details of the invention may be substituted by technically equivalent elements.

## Claims

1. A machine for producing and dispensing ice cream, in particular ice cream frappes or shakes comprising a shake production unit (2) connected to a dispensing device (4) for the shake produced and sensor means (10) for measuring the quantity of shake dispensed; the machine being **characterised in that** the sensor means (10) comprise at least one emitter (12) of a ray (F) of energy passing through a container (6) for collecting the shake dispensed, to intercept the shake contained in the collection container (6).

2. The machine according to claim 1, **characterised in that** the sensor means (10) also comprise at least one receiver (13) for rays of energy to intercept the ray (F) emitted.

3. The machine according to claim 2, **characterised in that** the dispensing device (4) comprises a dispensing nozzle (7) and means (8) for positioning and holding the container (6) below the dispensing nozzle (7).

4. The machine according to claim 3, **characterised in that** the emitter (12) and the receiver (13) for the ray of energy (F) are positioned on opposite sides of the container (6) positioning and holding means (8).

5. The machine according to claim 4, **characterised in that** the shake dispensed is impermeable to the ray of energy (F) emitted by the emitter (12) to interrupt reception by the receiver (13) when a predetermined quantity of shake in the container (6) is reached.

6. The machine according to any of the foregoing claims, **characterised in that** the collection container (6) comprises at least one window (6a) through which the ray of energy (F) emitted by the emitter (12) can pass.

7. The machine according to any of the foregoing claims, **characterised in that** the ray of energy (F) is a beam of electromagnetic waves emitted by the emitter (12).

8. The machine according to any of the foregoing claims, **characterised in that** the ray of energy (F) is a laser ray emitted by the emitter (12).

9. The machine according to any of the claims from 2 to 8, **characterised in that** the emitter (12) and the receiver (13) are aligned along a substantially horizontal axis (X).

10. The machine according to claim 8 or 9,
**characterised in that** the beam (F) of electromagnetic rays or the laser ray (F) emitted propagate along the substantially horizontal axis (X) to measure the level of shake present in the collection container (6).

11. The machine according to any of the claims from 3 to 10, **characterised in that** the dispensing nozzle (7) comprises rapid engagement means (17) for hooking soft collection containers (6) equipped with a closing cap (18).

12. The machine according to any of the foregoing claims, **characterised in that** it comprises dispensing device (4) control and command means (11) operatively connected to the sensor means (10) to activate or inhibit shake dispensing.

13. The machine according to any of the claims from 3 to 12, **characterised in that** the positioning and holding means (8) comprise a guide (14) for the container (6) to angle the container relative to the ray of energy (F).

14. The machine according to any of the claims from 3 to 12, **characterised in that** the positioning and holding means (8) comprise a rod (9) fixed to the wall (3) and extending substantially perpendicularly towards the dispensing nozzle (7).
